(19) Europäisches Patentamt
European Patent Office
Office européen des brevets

(11) EP 2 319 316 B1

(12) EUROPÄISCHE PATENTSCHRIFT

(45) Veröffentlichungstag und Bekanntmachung des Hinweises auf die Patenterteilung:
**26.02.2014 Patentblatt 2014/09**

(51) Int Cl.:
***A01N 57/20*** *(2006.01)*

(21) Anmeldenummer: **10010490.0**

(22) Anmeldetag: **10.08.1999**

# (54) Herbizide Mittel für tolerante oder resistente Maiskulturen

Herbicide device for tolerant or resistant maize cultures

Moyen herbicide pour cultures de maïs tolérantes ou résistantes

(84) Benannte Vertragsstaaten:
**AT BE CH CY DE DK ES FI FR GB GR IE IT LI LU MC NL PT SE**
Benannte Erstreckungsstaaten:
**RO SI**

(30) Priorität: **13.08.1998 DE 19836737**
**30.04.1999 DE 19919993**

(43) Veröffentlichungstag der Anmeldung:
**11.05.2011 Patentblatt 2011/19**

(62) Dokumentnummer(n) der früheren Anmeldung(en) nach Art. 76 EPÜ:
**99944356.7 / 1 104 243**

(73) Patentinhaber: **Bayer CropScience AG**
**40789 Monheim (DE)**

(72) Erfinder:
- **Hacker, Erwin**
  **65239 Hochheim (DE)**
- **Bieringer, Hermann**
  **65817 Eppstein (DE)**
- **Willms, Lothar**
  **65719 Hofheim (DE)**

(74) Vertreter: **von Renesse, Dorothea et al**
**König-Szynka-Tilmann-von Renesse**
**Patentanwälte Partnerschaft mbB**
**Postfach 11 09 46**
**40509 Düsseldorf (DE)**

(56) Entgegenhaltungen:
**EP-A- 0 569 944 EP-A2- 0 252 237**
**WO-A-92/09608 WO-A-95/05082**
**WO-A-96/13163 WO-A-96/32013**
**WO-A-96/41537 WO-A-97/36488**
**WO-A-98/09525 WO-A1-92/08353**
**DE-A1- 2 856 260**

- **CHEMICAL ABSTRACTS, Bd. 128, Nr. 9, 2. März 1998 (1998-03-02), Columbus, Ohio, US; abstract no.: 98937, BIESELER, BARBARA ET AL: "Maize selectivity of FOE 5043. Degradation of active ingredient by glutathione-S-transferases", XP002128422 & PFLANZENSCHUTZ-NACHR. BAYER (GER. ED.) (1997), 50(2), 117-142, 1997,**
- **CHEMICAL ABSTRACTS, Bd. 125, Nr. 5, 29. Juli 1996 (1996-07-29), Columbus, Ohio, US; abstract no.: 51408, KAPPES, E. M. ET AL: "Mikado. A new option for weed control in corn", XP002128423 & GESUNDE PFLANZ. (1996), 48(4), 119-125, 1996,**
- **CHEMICAL ABSTRACTS, Bd. 130, Nr. 2, 11. Januar 1999 (1999-01-11), Columbus, Ohio, US; abstract no.: 11523, LAZO, M. ET AL: "Isoxaflutole, a new corn herbicide from Rhone-Poulenc", XP002128424 & ACTAS - CONGR., SOC. ESP. MALHERBOL. (1997), 383-387 PUBLISHER: SOCIEDAD ESPANOLA DE MALHERBOLOGIA, LLEIDA, SPAIN., 1997,**
- **CHEMICAL ABSTRACTS, Bd. 121, Nr. 1, 4. Juli 1994 (1994-07-04), Columbus, Ohio, US; abstract no.: 3181, MYERS, MARK G. ET AL: "Triazine-resistant common lambs-quarters (Chenopodium album L.) control in field corn ( Zea mays L.)", XP002128425 & WEED TECHNOL. (1993), 7(4), 884-9, 1993,**
- **DATABASE CROPU [Online] Derwent International; 1998, KRAUSZ R F ET AL: "Evaluation of common waterhemp control with commercial and experimental herbicides in corn.", XP002128426, gefunden im STN Database accession no. 1998-88418 & RES.REP.NORTH CENT.WEED SCI.SOC. (54, 118-19, 1997) 1 TAB., 1997, Univ.Southern-Illinois**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **C TOMLIN (ED): "The Pesticide Manual, Tenth Edition", 1994, FARNHAM, GB, XP002099499, ISBN: 0-948404-79-5 * das ganze Dokument ***
- **DATABASE CROPU [Online] Derwent Internaional; 1998, FISCHER D W ET AL: "Glufosinate - tolerant field corn weed management studies.", XP002128427, gefunden im STN Database accession no. 1998-89461 & RES.REP.NORTH CENT.WEED SCI.SOC. (54, 364-66, 1997) 1 TAB., 1997, Univ.Wisconsin**
- **DATABASE CROPU [Online] Derwent Intwernational; 1998, ZOLLINGER R K ET AL: "Weed control in glufosinate tolerant corn.", XP002128428, gefunden im STN Database accession no. 1998-88691 & RES.REP.NORTH CENT.WEED SCI.SOC. (54, 162, 1997) 1 TAB., 1997,**
- **DATABASE CROPU [Online] Derwent International; 1998, ANDERSON D D ET AL: "Weed control in Liberty Link corn at Lincoln, NE in 1997.", XP002128429, gefunden im STN Database accession no. 1998-88680 & RES.REP.NORTH CENT.WEED SCI.SOC. (54, 140-41, 1997) 1 TAB., 1997, Univ.Nebraska**
- **DATABASE CROPU [Online] Derwent International; 1998, LYCAN D W ET AL: "Woolly cupgrass control in herbicide tolerant corn hybrids. Pontiac, Illinois, 1997.", XP002128430, gefunden im STN Database accession no. 1998-88419 & RES.REP.NORTH CENT.WEED SCI.SOC. (54, 120-21, 1997) 1 TAB., 1997, Univ.Illinois**


Bemerkungen:

Die Akte enthält technische Angaben, die nach dem Eingang der Anmeldung eingereicht wurden und die nicht in dieser Patentschrift enthalten sind.

## Beschreibung

Die Erfindung liegt auf dem Gebiet der Pflanzenschutzmittel, die gegen Schadpflanzen in toleranten oder resistenten Kulturen von Mais eingesetzt werden können und als Herbizidwirkstoffe eine Kombination von zwei oder mehreren Herbiziden enthalten.

Mit der Einführung von toleranten oder resistenten Maissorten und -linien, insbesondere von transgenen Maissorten und -linien, wird das herkömmliche Unkrautbekämpfungssystem um neue, per se in herkömmlichen Maissorten nichtselektive Wirkstoffe ergänzt. Die Wirkstoffe sind beispielsweise die bekannte breitwirksame Herbizide wie Glyphosate, Sulfosate, Glufosinate, Bialaphos und Imidazolinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, daß Wirkstoffe aus der Gruppe der genannten breitwirksamen Herbizide (A) in Kombination mit anderen Herbiziden aus der Gruppe (A) und gegebenenfalls bestimmten Herbiziden (B) in besonders günstiger Weise zusammenwirken, wenn sie in den Maiskulturen eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Maiskulturen, dadurch gekennzeichnet, daß die jeweilige Herbizid-Kombination einen synergistisch wirksamen Gehalt an

> (A) einem breitwirksamen Herbizid aus der Gruppe der Verbindungen, welche aus Glyphosate und dessen Alkalimetallsalzen oder Salzen mit Aminen und Sulfosate, und
> (B) einem Herbizid aus der Gruppe der Verbindungen, welche aus
> (B1) Herbiziden der Gruppe Alachlor, Nicosulfuron, Rimsulfuron, Fluthiamide, Sulcotrione, Mesotrione und Pethoxamid oder
> (B2) Herbiziden der Gruppe Pendimethalin, Iodosulfuron-methyl, Metosulam, Isoxaflutole, Metribuzin, Cloransulam-methyl, Flumetsulam, Linuron, Florasulam oder
> (B3) Herbiziden der Gruppe Bromoxynil, 2,4-D, Clopyralid, Thifensulfuron-methyl, Carfentrazone-ethyl, MCPA, Halosulfuron-methyl, Diflufenzopyr und Sulfosulfuron

besteht,
aufweist und die Maiskulturen gegenüber den in der Kombination enthaltenen Herbiziden (A) und (B), gegebenenfalls in Gegenwart von Safenern, tolerant sind.

Neben den erfindungsgemäßen Herbizid-Kombinationen können weitere Pflanzenschutzmittelwirkstoffe und im Pflanzenschutz übliche Hilfsstoffe und Formulierungshilfsmittel verwendet werden.

Die synergistischen Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

In WO-A-98/09525 ist bereits ein Verfahren zur Bekämpfung von Unkräutern in transgenen Kulturen beschrieben, welche gegenüber phosphorhaltigen Herbiziden wie Glufosinate oder Glyphosate resistent sind, wobei Herbizid-Kombinationen eingesetzt werden, welche Glufosinate oder Glyphosate und mindestens ein Herbizid aus der Gruppe Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl-4-hydroxy-6-chlorpyridazin), eine Verbindung der Formel,

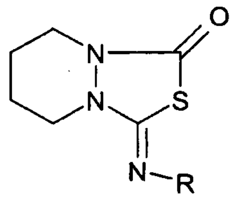

worin R = 4-Chlor-2-fluor-5-(methoxycarbonylmethylthio)-phenyl bedeutet, (bekannt aus US-A-4671819), CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethylpyrimidin-2-yl)-aminocarbonyl]-aminosulfonyl}-benzoesäure-4-oxetanylester (bekannt aus EP-A-496701) enthalten. Einzelheiten über die erzielbaren oder erzielten Effekte gehen aus der Druckschrift WO-A-98/09525 nicht hervor. Beispiele zu synergistischen Effekten oder zur Durchführung des Verfahrens in bestimmten Kulturen fehlen ebenso wie konkrete Kombinationen aus zwei, drei oder weiteren Herbiziden.

Aus DE-A-2856260 sind bereits einige Herbizid-Kombinationen mit Glufosinate oder L-Glufosinate und anderen Herbiziden wie Alloxidim, Linuron, MCPA, 2,4-D, Dicamba, Triclopyr, 2,4,5-T, MCPB und anderen bekannt.
Aus WO-A-92/083 53 und EP-A 0 252 237 sind bereits einige Herbizid-Kombinationen mit Glufosinate oder Glyphosate und anderen Herbiziden aus der Sulfonylharnstoffreihe wie Metsulfuron-methyl, Nicosulfuron, Primisulfuron, Rimsulfuron u.a. bekannt.

Die Anwendung der Kombinationen zur Bekämpfung von Schadpflanzen ist in den Druckschriften nur an wenigen Pflanzenspezies oder aber an keinem Beispiel gezeigt worden.

In eigenen Versuchen wurde gefunden, daß überraschenderweise große Unterschiede zwischen der Verwendbarkeit der in WO-A-98/09525 und den anderen Referenzen erwähnten Herbizid-Kombinationen und auch anderer neuartiger Herbizid-Kombinationen in Pflanzenkulturen bestehen.

Erfindungsgemäß werden Herbizid-Kombinationen bereitgestellt, die in toleranten Maiskulturen besonders günstig eingesetzt werden können.

Beispiele für Verbindungen (A2) sind

(A2.1) Glyphosate, d. h. N-(Phosphonomethyl)-glycin,
(A2.2) Glyphosate-monoisopropylammoniumsalz,
(A2.3) Glyphosate-natriumsalz,
(A2.4) Sulfosate, d. h. N-(Phosphonomethyl)-glycin-trimesiumsalz = N-(Phosphonomethyl)-glycin-trimethylsulfoxoniumsalz,

Glyphosate wird üblicherweise in Form eines Salzes, vorzugsweise des Monoisopropylammoniumsalzes oder des Trimethylsulfoxoniumsalzes (=Trimesiumsalzes = Sulfosate) eingesetzt. Bezogen auf die freie Säure Glyphosate liegt die Einzeldosierung im Bereich von 0,5-5 kg AS/ha. Glyphosate ist unter manchen anwendungstechnischen Aspekten dem Glufosinate ähnlich, jedoch ist es im Gegensatz dazu ein Hemmstoff für des Enzyms 5-Enolpyruvylshikimat-3-phosphat-Syntase in Pflanzen; siehe "The Pesticide Manual" 11th Ed., British Crop Protection Council 1997 S. 646-649. In den erfindungsgemäßen Kombinationen benötigt man in der Regel Aufwandmengen im Bereich von 20 bis 1000,

vorzugsweise 20 bis 800 g AS/ha Glyphosate.

Auch für Verbindungen (A2) sind bereits gentechnisch erzeugte tolerante Pflanzen bekannt und in der Praxis eingeführt worden; vgl. "Zuckerrübe" 47. Jahrgang (1998), S. 217 ff.; vgl. auch WO 92/00377, EP-A-115673, EP-A-409815.

Als Kombinationspartner (B) kommen beispielsweise Verbindungen der Untergruppen (B1) bis (B3) in Frage:

(B1) Herbizide, die sowohl blattwirksam als auch bodenwirksam sind und selektiv in Mais gegen Gräser und Dikotyle eingesetzt werden können, beispielsweise die folgenden Verbindungen (Angabe mit dem "common name" und der Referenzstelle aus "The Pesticide Manual" 11th Ed., British Crop Protection Council 1997, abgekürzt "PM"):

(B1.6) Alachlor (PM, S. 23-24), d. h. 2-Chlor-N-(2,6-diethylphenyl)-N-(methoxymethyl)-acetamid,
(B1.9) Nicosulfuron (PM, S. 877-879), d. h. 2-(4,6-Dimethoxypyrimidin-2-yl)-3-(3-dimethylcarbamoyl-2-pyridylsulfonyl)-harnstoff,
(B1.10) Rimsulfuron (PM, S. 1095-1097), d. h. 1-(4,6-Dimethoxypyrimidin-2-yl)-3-(3-ethylsulfonyl-2-pyridylsulfonyl)-harnstoff,
(B1.13) Fluthiamide (BAY FOE 5043, Flufenacet) (PM, S. 82-83), d.h. 4'-Fluor-N-isopropyl-2-(5-trifluormethyl-1,3,4-thiadiazol-2-yloxy)-acetanilid,
(B1.14) Sulcotrione (PM, S. 1124-1125), d. h. 2-(2-Chlor-4-mesylbenzoyl)-cyclohexan-1,3-dion,
(B1.16) Mesotrione, d. h. 2,(4-Mesyl-2-nitrobenzoyl)-cyclohexan-1,3-dion (ZA1296, vgl. Weed Science Society of America (WSSA) in WSSA Abstracts 1999, Bd. 39, Seite 65-66, Ziffern 130-132),
(B1.17) Penthoxamid, d.h. 2-Chlor-N-(2-ethoxyethyl)-N-(2-methyl-1-phenyl-1-propenyl)-acetamid (TKC-94, bekannt aus AG Chem New Compound, Review Vol. 17 (1999), EP-A-206 251),

und, falls Wirkstoffe aus der Gruppe (B1) als racemische Gemische vorliegen, vorzugsweise auch der jeweilige Wirkstoff in der Form des reinen oder angereicherten wirksamen Isomers,

(B2) selektiv in Mais gegen Dikotyle einsetzbare Herbizide, beispielsweise die Verbindungen

(B2.1) Pendimethalin (PM, S. 937-939), d. h. N-(1-ethylpropyl)-2,6-dinitro-3,4-xylidin,
(B2.3) Iodosulfuron-(proposed common name) Methylester (vgl. WO 96/41537), d. h. 4-Iod-2-(4-Methoxy-6-methyl-1,3,5-triazin-2-ylcarbamoylsulfamoyl)-benzoesäure -methylester, bekannt aus WO-A-92/13845,
(B2.4) Metosulam (PM, S. 836-495), d. h. 2',6'-Dichlor-5,7-dimethoxy-3'-methyl-[1,2,4]triazolo[1,5a]pyrimidin-2-sulfonanilid,
(B2.5) Isoxaflutole (PM, S. 737-739), d. h. (5-Cyclopropyl-4-isoxazolyl)[2-(methylsulfonyl)-4-(trifluormethyl)phenyl]methanon,
(B2.6) Metribuzin (PM, S. 4-Amino-6-tert.-butyl-3-methylthio-1,2,4-triazin-5(4H)-on,
(B2.7) Cloransulam-Methylester (PM, S. 165), d.h. 3-Chlor-2-(5-ethoxy-7-fluor-[1,2,4]triazolo-[1,5-c]pyrimidin-2-ylsulfonamido)benzoesäure-methylester,
(B2.8) Flumetsulam (PM, S. 573-574), d. h. 2',6'-Dichlor-5-methyl-[1,2,4]triazolo[1,5a]pyrimidin-2-sulfonanilid und
(B2.9) Linuron (PM, S. 751-753), d. h. 3-(3,4-Dichlorphenyl)-1-methoxy-1-methyl-harnstoff und
(B2.10) Florasulam, d.h. N-(2,6-Difluorphenyl)-8-fluor-5-methoxy-1,2,4-triazolo[1,5C]-pyrimidin-2-sulfonamid (DE-570, vgl. Zeitschrift Pfl. Krankh. PflSchutz, Sonderblatt XVI, 527-534 81998),

und, falls genannte Wirkstoffe aus der Gruppe (B2) als racemische Gemische vorliegen, vorzugsweise auch der jeweilige Wirkstoff in der Form des reinen oder angereicherten wirksamen Isomers,

(B3) Herbizide, die blattwirksam und bodenwirksam sind und selektiv in Mais überwiegend gegen dicotyle Schadpflanzen eingesetzt werden können, beispielsweise die Verbindungen:

(B3.1) Bromoxynil (PM, S. 149-151), d. h. 3,5-Dibrom-4-hydroxy-benzonitril,
(B3.3) 2,4-D (PM, S. 323-327), d. h. 2,4-Dichlorphenoxyessigsäure und deren Salze und Ester,
(B3.4) Clopyralid (PM, S. 260-263), d. h. 3,6-Dichlor-2-pyridincarbonsäure und deren Salze und Ester,
(B3.6) Thifensulfuron-Methylester (PM, S. 1188-1190), d. h. 3-[[[[(4-Methoxy-6-methyl-1,3,5-triazin-2-yl)-amino]-carbonyl]-amino]sulfonyl]-2-thiophencarbonsäure-methylester,
(B3.7) Carfentrazone-Ethylester (PM, S. 191-193), d. h. 2-Chlor-3-[2-chlor-5-(difluormethyl-4,5-dihydro-3-methyl-5-oxo-1H-1,2,4-triazol-1-yl)-4-fluorphenyl]-propionsäure -ethylester,
wobei Kombinationen mit Verbindung (A4.2) definitionsgemäß keine Herbizid-Kombinationen unterschiedlicher

Herbizidwirkstoffe A und B darstellen und somit ausgenommen sind,
(B3.9) MCPA (PM, S. 767-769), d.h. (4-Chlor-2-methylphenoxy)essigsäure, und dessen Salze und Ester,
(B3.10) Halosulfuron-Methylester (PM, S. 657-659), d.h. 3-Chlor-5-(4,6-dimethoxypyrimidin-2-ylcarbamoylsulfamoyl)-1-methylpyrazol-carbonsäuremethylester, auch in dessen Salzform,
(B3.11) Diflufenzopyr (BASF 654 00 11) (PM, S. 81-82), d.h. 2-{1-[4-(3,5-Difluorphenyl)semicarbazon]-ethyl} nicotinsäure, und dessen Salze,
(B3.12) Sulfosulfuron (PM, S. 1130-1131), d.h. 1-(4,6-Dimethoxypyrimidin-2-yl)-3-(2-ethylsulfonylimidazo[1,2-a]-pyridin-3-yl-sulfonyl)-harnstoff

und, falls genannte Wirkstoffe aus der Gruppe (B3) als racemische Gemische vorliegen, vorzugsweise auch der jeweilige Wirkstoff in der Form des reinen oder angereicherten wirksamen Isomers.

Im Falle von Wirkstoffen auf Basis von Carbonsäuren oder anderen salz- bildenden Wirkstoffen soll die Bezeichnung der Herbizide durch den "common name" der Säure auch die Salze erfassen, vorzugsweise die handelsüblichen Salze, insbesondere die gängige Handelsform des Wirkstoffes.

Die Aufwandmengen der Herbizide (B) können von Herbizid zu Herbizid stark variieren. Als grobe Richtgröße können folgende Bereiche gelten:

Zu Verbindungen (B1): 0,1-5000 g AS/ha, vorzugsweise 1-5000 g AS/ha,
Zu Verbindungen (B2): 0,1-5000 g AS/ha, vorzugsweise 1-3000 g AS/ha
Zu Verbindungen (B3): 0,5-5000 g AS/ha, vorzugsweise 1-3000 g AS/ha

Im einzelnen sind folgende Aufwandmengen in g AS/ha bevorzugt:

(B1.1) bis (B1.8) 100-5000 g, vorzugsweise 200-4000, insbesondere 300-3500,
(B1.9) bis (B1.11) 0,1 - 120, vorzugsweise 1-90,
(B1.13) 100-2000, vorzugsweise 200-1500, insbesondere 300-1200,
(B1.14) 50-1000, vorzugsweise 100-600, insbesondere 200-500,
(B1.16) 10-500, vorzugsweise 25-300, insbesondere 50-200,
(B1.17) 5-1500, vorzugsweise 10-1000, insbesondere 20-800,
(B2.1) 100-3000, vorzugsweise 200-2500, insbesondere 300-2000,
(B2.3) 0,1-100, vorzugsweise 0,2-20, insbesondere 0,5-15,
(B2.4) 1-200, vorzugsweise 5-150, insbesondere 10-100,
(B2.5) 5-300, vorzugsweise 10-200, insbesondere 20-150,
(B2.6) 10-1500, vorzugsweise 25-1000, insbesondere 50-800,
(B2.7) 2-200, vorzugsweise 2,5-100, insbesondere 5-80,
(B2.8) 5-500, vorzugsweise 10-300, insbesondere 20-200,
(B2.9) 50-2500, vorzugsweise 100-2000, insbesondere 200-1000,
(B2.10) 0,5-100, vorzugsweise 1-20, insbesondere 3-15,
(B3.1) 50-1000, vorzugsweise 100-600, insbesondere 200-500,
(B3.3) 50-3000, vorzugsweise 100-2000, insbesondere 200-1500,
(B3.4) 10-300, vorzugsweise 20-250, insbesondere 40-200,
(B3.6) 0,5-100, vorzugsweise 1-50, insbesondere 2-40,
(B3.7) 1-250, vorzugsweise 5-120, insbesondere 10-100,
(B3.9) 50-3000, vorzugsweise 100-2000, insbesondere 200-1500,
(B3.10) 1-200, vorzugsweise 5-150, insbesondere 10-50,
(B3.11) 5-1000, vorzugsweise 10-500, insbesondere 20-80,
(B3.12) 1-150, vorzugsweise 5-100, insbesondere 5-80,

Die Mengenverhältnisse der Verbindungen (A) und (B) ergeben sich aus den genannten Aufwandmengen für die Einzelstoffe und sind beispielsweise folgende Mengenverhältnisse von besonderem Interesse:

(A):(B) im Bereich von 18000:1 bis 1:5000, vorzugsweise 2000:1 bis 1:1000, insbesondere 200:1 bis 1:100,
(A2):(B1) im Bereich von 2500:1 bis 1:100, vorzugsweise von 2000:1 bis 1:50, insbesondere von 300:1 bis 1:20,
(A2):(B2) im Bereich von 18000:1 bis 1:100, vorzugsweise von 2000:1 bis 1:50, insbesondere von 300:1 bis 1:20,
(A2):(B3) im Bereich von 3000:1 bis 1:100, vorzugsweise von 2000:1 bis 1:50, insbesondere von 300:1 bis 1:20,

Von besonderem Interesse ist die Anwendung der Kombinationen

(A2.2) + (B1.6), (A2.2) + (B1.9), (A2.2) + (B1.10),
(A2.2) + (B1.13), (A2.2) + (B1.14),
(A2.2) + (B1.16), (A2.2) + (B1.17),
(A2.2) + (B2.1), (A2.2) + (B2.3), (A2.2) + (B2.4), (A2.2) + (B2.5),
(A2.2) + (B2.6), (A2.2) + (B2.7), (A2.2) + (B2.8), (A2.2) + (B2.9),
(A2.2) + (B2.10),
(A2.2) + (B3.1), (A2.2) + (B3.3), (A2.2) + (B3.4),
(A2.2) + (B3.6), (A2.2) + (B3.7), (A2.2) + (B3.9),
(A2.2) + (B3.10), (A2.2) + (B3.11), (A2.2) + (B3.12).

In Einzelfällen kann es sinnvoll sein, eine oder mehrere der Verbindungen (A) mit mehreren Verbindungen (B), vorzugsweise aus den Klassen (B1), (B2) und (B3) zu kombinieren.

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.
Zusatzstoffe sind beispielsweise Düngemittel und Farbstoffe.

Bevorzugt sind Herbizid-Kombinationen aus einer oder mehreren Verbindungen (A) mit einer oder mehreren Verbindungen der Gruppe (B1) oder (B2) oder (B3).
Weiter bevorzugt sind Kombinationen von einer oder mehreren Verbindungen (A), vorzugsweise einer Verbindung (A), mit einer oder mehreren Verbindungen (B) nach dem Schema:

(A) + (B1) + (B2), (A) + (B1) + (B3), (A) + (B2) + (B3).

Dabei sind auch solche Kombinationen erfindungsgemäß, denen noch ein oder mehrere weitere Wirkstoffe anderer Struktur [Wirkstoffe (C)] zugesetzt werden wie

(A) + (B1) + (C), (A) + (B2) + (C) oder (A) + (B3) + (C),
(A) + (B1) + (B2) + (C) oder (A) + (B1) + (B3) + (C) oder (A) + (B2) + (B3) + (C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind. Bevorzugt sind als Wirkstoff (C) solche, die eine Safenerwirkung für die Maiskultur aufweisen, speziell also Safener, die in Kombination mit den Herbiziden (B) phythotoxische Nebenwirkungen der Herbizide bei Maispflanzen reduzieren oder vermeiden.

Von besonderem Interesse ist auch die erfindungsgemäße Verwendung der Kombinationen mit einem oder mehreren Herbiziden aus der Gruppe (A), (A2.2) und mit einem oder mehreren Herbiziden, vorzugsweise einem Herbizid, aus der Gruppe (B1') Alachlor, Fluthiamide, Sulcotrione, Mesotrione und Pethoxamid oder (B2') Pendimethalin, Iodosulfuron-methyl, Metosulam, Isoxaflutole, Metribuzin, Cloransulam-methyl, Flumetsulam und auch Florasulam oder (B3') Bromoxynil, Clopyralid, Carfentrazone-ethyl und auch Halosulfuron-methyl, Diflufenzopyr und Sulfosulfuron oder Herbiziden aus mehreren der Gruppen (B1') bis (B3').
Bevorzugt sind dabei die Kombinationen aus der jeweiligen Komponente (A) mit einem oder mehreren Herbiziden aus der Gruppe (B1'), (B2') oder (B3'). Weiter bevorzugt sind die Kombinationen (A)+(B1')+(B2'), (A)+(B1')+(B3') oder (A)+(B2')+(B3').

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll. Auf der Seite der monokotylen Unkrautarten werden z.B. Echinochloa spp., Setaria spp., Digitaria spp., Brachiaria spp., Panicum spp., Agropyron spp., Wildgetreideformen und Sorghum spp. gut erfaßt, aber auch Avena spp., Alopecurus spp., und Cynodon spp, Lolium spp., Phalaris spp., Poa spp. sowie Cyperusarten und Imperata.

Bei dikotylen Unkrautarten erstreckt sich das Wirkungsspektrum auf Arten wie z.B. Chenopodium spp., Amaranthus spp., Solanum spp., Datura spp., Abutilon spp., Ipomoea spp., Polygonum spp., Xanthium spp., Stellaria spp., Kochia spp. und Viola spp., aber auch Chrysanthemum spp., Matricaria spp., Veronica spp.,Anthemis spp., Thlaspi spp.,

Galium spp., Lamium spp., Pharbitis spp., Sida spp., Sinapis spp., Cupsella spp., Cirsium spp., Convolvulus spp., Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Eintritt der Mittel auch die Menge an schädlichen Inhaltsstoffen in der Kulturpflanze, wie Stickstoff oder Ölsäure, reduziert.
Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Verbindungen eine ausgezeichnete herbizide Aktivität gegenüber mono- und dikotylen Unkräutern aufweisen, werden die toleranten bzw. kreuztoleranten Maispflanzen nur unwesentlich oder gar nicht geschädigt. Darüberhinaus weisen die erfindungsgemäßen Mittel teilweise hervorragende wachstumsregulatorische Eigenschaften bei den Maispflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Maiskulturen oder noch zu entwickelnden toleranten oder gentechnisch veränderten Maiskulturen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit
  Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Maiskulturen, dadurch gekennzeichnet, daß man ein oder mehrere Herbizide des Typs (A) mit einem oder mehreren Herbiziden des Typs (B) auf die Schadpflanzen, Pflanzenteile davon oder die Anbaufläche appliziert.
Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren

herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.

Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der Imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (@Triton X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsern und Unkräutern auf.

Dabei werden häufig Wirkungen der erfindungsgemäßen Kombinationen beobachtet, die die formale Summe der Wirkungen bei Einzelapplikation der Herbizide übertreffen (= synergistische Wirkung).

Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. in % bei a bzw. b g AS/ha; E = Erwartungswert in % bei a+b g AS/ha. Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgenem Mais mit einer Resistenz gegen ein oder mehrere Herbizide (A) wurden zusammen mit typischen Unkrautpflanzen im Freiland auf Parzellen der Größe 2 x 5m unter natürlichen Freilandbedingungen herangezogen; alternativ stellte sich beim Heranziehen der Maispflanzen die Verunkrautung natürlich ein. Die Behandlung mit den erfindungsgemäßen Mitteln und zur Kontrolle separat mit alleiniger Applikation der Komponentenwirkstoffe erfolgte unter Standardbedingungen mit einem Parzellen-Spritzgerät bei einer Wasseraufwandmenge von 200-300 Liter je Hektar in Parallelversuchen gemäß dem Schema aus Tabelle 1, d. h. im Vorsaat-Vorauflauf, im Nachsaat-Vorauflauf oder im Nachauflauf im frühen, mittleren oder späten Stadium.

Tabelle 1: Anwendungsschema - Beispiele

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| kombiniert | (A)+(B) | | | | |
| " | | (A)+(B) | | | |
| " | | | (A)+(B) | | |
| " | | | | (A)+(B) | |
| " | | | | | (A)+(B) |
| sequentiell | (A) | | (B) | | |
| " | | (A) | (B) | | |
| " | | (A) | | (B) | |
| " | | (A) | (A) | (B) | |
| " | | (A) | | (B) | (B) |
| " | | (A) | | (A)+(B) | |
| " | (B) | | (A) | | |
| " | | (B) | | (A)+(B) | |
| " | (A)+(B) | | (A)+(B) | | |

(fortgesetzt)

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| " | (A)+(B) | (A)+(B) | (A)+(B) | | |
| " | | (A)+(B) | (A)+(B) | | |
| " | | (A)+(B) | (A)+(B) | (A)+(B) | |
| " | | (A)+(B) | (A)+(B) | (A)+(B) | (A)+(B) |
| " | | | (A)+(B) | (A)+(B) | |
| " | | | (A)+(B) | (A)+(B) | (A)+(B) |
| " | | | | (A)+(B) | (A)+(B) |

Im Abstand von 2, 4, 6 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Pflanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.

Der Vergleich zeigte, daß die erfindungsgemäßen Kombinationen meist mehr, teilweise erheblich mehr herbizide Wirkung aufweisen als die Summe der Wirkungen der Einzelherbizide (=$E^A$). Die Wirkungen lagen in wesentlichen Abschnitten des Boniturzeitraums über den Erwartungswerten nach Colby (= $E^C$) (vgl. Bonitur in Beispiel 1) und weisen deshalb auf einen Synergismus hin. Die Maispflanzen dagegen wurden infolge der Behandlungen mit den herbiziden Mitteln nicht oder nur unwesentlich geschädigt.

Weitere Versuchsergebnisse sind in den nachfolgenden Tabellen zusammengefaßt.

In den Tabellen allgemein verwendete Abkürzungen:

g AS/ha = Gramm Aktivsubstanz (100 % Wirkstoff) pro Hektar
$E^A$ = Summe der herbiziden Wirkungen der Einzelapplikationen
$E^C$ = Erwartungswert nach Colby (vgl. Bonitur zu Tabelle 1)
"Mais LL" = ®Liberty-Link-Mais, der gegen Glufosinate-ammonium tolerant oder resistent ist,

Tabelle 2 Herbizide Wirkung im Feldversuch in Mais

| Wirkstoff(e) | Dosis[1)] g AS/ha | Herbizide Wirkung[2)] (%) gegen Lamium amplexicaule |
|---|---|---|
| (A2.1) | 600<br>400 | 90<br>75 |
| (B2.3) | 2,5 | 55 |
| (A2.1) + (B2.3) | 400 + 2,5 | 93 ($E^C$ = 88) |
| Abkürzungen zu Tabelle 19:<br>[1)] = Applikation im 1-Blattstadium [2)] = Bonitur 17 Tage nach Applikation<br>(A1.2) = Glyphosate-isopropylammonium (B2.3) = Iodosulfuron-methyl | | |

Tabelle 3 Herbizide Wirkung im Feldversuch in Mais

| Wirkstoff(e) | Dosis[1)] g AS/ha | Herbizide Wirkung[2)] (%) gegen Convolvulus arvensis |
|---|---|---|
| (A2.2) | 400<br>200 | 20<br>0 |
| (B3.3) | 500 | 20 |

(fortgesetzt)

| Wirkstoff(e) | Dosis[1)] g AS/ha | Herbizide Wirkung[2)] (%) gegen Convolvulus arvensis |
|---|---|---|
| (A2.2) + (B3.3) | 400+500 | 50 ($E^A$ = 40) |
| (B3.9) | 500 | 60 |
| (A2.2) + (B3.9) | 200+500 | 75 ($E^A$ = 60) |
| (B2.2) | 900 | 40 |
| (A2.2) + (B2.2) | 200+900 | 73 ($E^A$ = 40) |
| (B1.12) | 900 | 30 |
| (A2.2) + (B1.12) | 200+900 | 65 ($E^A$ = 30) |

Abkürzungen zu Tabelle 20:
1) = Applikation im 3- bis 4-Blattstadium
2) = Bonitur 28 Tage nach Applikation
(A2.2) = Glyphosate-isopropylammonium
(B3.3) = 2,4-D
(B3.9) = MCPA
(B2.2) = Pyridate
(B1.12) = Dimethenamid

## Patentansprüche

1. Verwendung von Herbizid-Kombinationen zur Bekämpfung von Schadpflanzen in Maiskulturen, **dadurch gekennzeichnet, daß** die jeweilige Herbizid-Kombination einen wirksamen Gehalt an

   (A) einem breitwirksamen Herbizid aus der Gruppe der Verbindungen, welche aus (A2) Glyphosate und dessen Alkalimetallsalzen oder Salzen mit Aminen und Sulfosate besteht,
   und
   (B) einem Herbizid aus der Gruppe der Verbindungen, welche aus
   (B1) Herbiziden der Gruppe Alachlor, Nicosulfuron, Rimsulfuron, Fluthiamide, Sulcotrione, Mesotrione und Pethoxamid oder
   (B2) Herbiziden der Gruppe Pendimethalin, Iodosulfuron-methyl, Metosulam, Isoxaflutole, Metribuzin, Cloransulam-methyl, Flumetsulam, Linuron, Florasulam oder
   (B3) Herbiziden der Gruppe Bromoxynil, 2,4-D, Clopyralid, Thifensulfuron-methyl, Carfentrazone-ethyl, MCPA, Halosulfuron-methyl, Diflufenzopyr und Sulfosulfuron besteht,

   aufweist und die Maiskulturen gegenüber den in der Kombination enthaltenen Herbiziden (A) und (B), gegebenenfalls in Gegenwart von Safenern, tolerant sind.

2. Verwendung nach Anspruch 1, **dadurch gekennzeichnet, dass** die jeweilige Herbizid-Kombination einen synergistisch wirksamen Gehalt an (A) und (B) aufweist.

3. Verwendung nach einem der Ansprüche 1 oder 2, wobei die Anwendung der Herbizid-Kombination im Nachauflaufverfahren erfolgt.

4. Verwendung nach Anspruch 3, **dadurch gekennzeichnet, dass** die Wirkstoffe gemeinsam ausgebracht werden.

5. Verwendung nach einem der vorherigen Ansprüche, **dadurch gekennzeichnet, daß** als Wirkstoff (A) Glyphosate-isopropylammonium eingesetzt wird.

6. Verwendung nach einem der vorherigen Ansprüche, **dadurch gekennzeichnet, daß** die Herbizid-Kombinationen in Gegenwart weiterer Pflanzenschutzmittelwirkstoffe und im Pflanzenschutz übliche Hilfsstoffe und Formulierungshilfsmittel verwendet werden.

7. Verfahren zur Bekämpfung von Schadpflanzen in toleranten Maiskulturen, **dadurch gekennzeichnet, daß** man die Herbizide der Herbizid-Kombination, definiert gemäß einem oder mehreren der Ansprüche 1, 2 oder 4 bis 6, gemeinsam oder getrennt im Vorauflauf, Nachauflauf oder im Vor- und Nachauflauf auf die Pflanzen, Pflanzenteile, Pflanzensamen oder die Anbaufläche appliziert.

8. Verfahren nach Anspruch 7, **dadurch gekennzeichnet, dass** man die Herbizide der Herbizid-Kombination gemeinsam im Nachauflauf appliziert.

9. Herbizide Zusammensetzung, **dadurch gekennzeichnet, daß** sie ein Herbizid (A) aus der Gruppe der Verbindungen
(A2) Glyphosate und dessen Alkalimetallsalzen oder Salzen mit Aminen und Sulfosate
und ein Herbizid (B) aus der Gruppe
(B1) der Herbizide der Gruppe, Alachlor, Fluthiamide, Sulcotrione und Mesotrione oder
(B2) der Herbizide aus der Gruppe Pendimethalin, Iodosulfuron-methyl, Metosulam, Isoxaflutole, Metribuzin, Cloransulam-methyl, Flumetsulam, Florasulam oder
(B3) der Herbizide aus der Gruppe Bromoxynil, Clopyralid, Carfentrazone-ethyl, Halosulfuron-methyl, Diflufenzopyr und Sulfosulfuron
aufweist.

10. Herbizide Zusammensetzung nach Ansruch 11 bis 13, dadurch gekenzeichnet, dass Wirkstoff (A) Glyphosate-isopropylammonium vorliegt.

11. Herbizide Zusammensetzung nach Anspruch 10, **dadurch gekennzeichnet, dass** die Herbizid-Kombination einen synergistisch wirksamen Gehalt an (A) und (B) aufweist.

12. Herbizide Zusammensetzung gemäß einem der Ansprüche 9 bis 11, **dadurch gekennzeichnet, daß** sie im Pflanzenschutz übliche Zusatzstoffe und Formulierungshilfsmittel enthält.

13. Verwendung der nach einem der Ansprüche 9 bis 12 definierten Zusammensetzung zur Wachstumsregulierung von Maispflanzen.

14. Verwendung der nach einem der Ansprüche 9 bis 13 definierten Zusammensetzung zur Beeinflussung des Ertrags oder der Inhaltstoffe von Maispflanzen.

## Claims

1. Use of herbicide combinations for controlling harmful plants in maize crops, **characterized in that** the herbicide combination in question has an effective content of

   (A) a broad-spectrum herbicide from the group of the compounds,
   which consists of
   (A2) glyphosate and its alkali metal salts or salts with amines and sulfosate, and
   (B) a herbicide from the group of compounds which consists of
   (B1) herbicides from the group alachlor, nicosulfuron, rimsulfuron, fluthiamide, sulcotrione, mesotrione and pethoxamid or
   (B2) herbicides from the group pendimethalin, iodosulfuron-methyl, metosulam, isoxaflutole, metribuzin, cloransulam-methyl, flumetsulam, linuron, florasulam or
   (B3) herbicides from the group bromoxynil, 2,4-D, clopyralid, thifensulfuron-methyl, carfentrazone-ethyl, MCPA, halosulfuron-methyl, diflufenzopyr and sulfosulfuron

   and **in that** the maize crops are tolerant to the herbicides (A) and (B) which are present in the combination, if appropriate in the presence of safeners.

2. Use according to Claim 1, **characterized in that** the respective herbicide combination has a synergistically active content of (A) and (B).

3. Use according to either of Claims 1 and 2, **characterized in that** the herbicide combination is applied post-emergence.

4. Use according to Claim 3, **characterized in that** the active substances are applied jointly.

5. Use according to any of the preceding claims, **characterized in that** glyphosate-isopropylammonium is employed as active compound (A).

6. Use according to one of the preceding claims, **characterized in that** the herbicide combinations are used in the presence of further plant-protection actives and adjuvants and formulation aids which are conventionally used in plant protection.

7. Method of controlling harmful plants in tolerant maize crops, **characterized in that** the herbicides of the herbicide combination, as defined in one or more of Claims 1, 2 or 4 to 6, are applied jointly or separately, pre-emergence, post-emergence or pre- and post-emergence to the plants, parts of the plants, seeds of the plants or the area under cultivation.

8. Method according to Claim 7, **characterized in that** the herbicides of the herbicide combination are applied jointly post-emergence.

9. Herbicidal composition, **characterized in that** it includes a herbicide (A) from the group of the compounds (A2) glyphosate and its alkali metal salts or salts with amines and sulfosate
and a herbicide (B) from the group

(B1) of the herbicides from the group alachlor, fluthiamide, sulcotrione and mesotrione
or
(B2) of the herbicides from the group pendimethalin, iodosulfuron-methyl, metosulam, isoxaflutole, metribuzin, cloransulam-methyl, flumetsulam, florasulam or
(B3) of the herbicides from the group bromoxynil, clopyralid, carfentrazone-ethyl, halosulfuron-methyl, diflufenzopyr and sulfosulfuron.

10. Herbicidal composition according to Claims 11 to 13, **characterized in that** glyphosate-isopropylammonium is present as active compound (A).

11. Herbicidal composition according to Claim 10, **characterized in that** the herbicide combination has a synergistically active content of (A) and (B).

12. Herbicidal composition according to any of Claims 9 to 11, **characterized in that** it comprises additives and formulation aids which are conventionally used in plant protection.

13. Use of the composition as defined in any of Claims 9 to 12 for controlling the growth of maize plants.

14. Use of the composition as defined in any of Claims 9 to 13 for influencing the yield or the constituents of maize plants.

## Revendications

1. Utilisation de combinaisons herbicides pour lutter contre des plantes nuisibles dans les cultures de maïs, **caractérisée en ce que** chaque combinaison herbicide présente une teneur active en

(A) un herbicide à large spectre du groupe des composés qui est constitué par (A2) le glyphosate et ses sels de métal alcalin ou ses sels avec des amines et le sulfosate,
et
(B) un herbicide du groupe des composés qui est constitué par
(B1) les herbicides du groupe alachlore nicosulfuron, rimsulfuron, fluthiamide, sulcotrione, mésotrione et péthoxamide ou
(B2) les herbicides du groupe pendiméthaline, iodosulfuron-méthyl, métosulam, isoxaflutole, métribuzine, cloransulam-méthyl, flumetsulam, linuron, florasulam ou
(B3) les herbicides du groupe bromoxynil, 2,4-D, chlopyralid, thifensulfuron-méthyl, carfentrazone-éthyl, MCPA, halosulfuron-méthyl, diflufenzopyr et sulfosulfuron,

et les cultures de maïs sont tolérantes aux herbicides (A) et (B) contenus dans la combinaison, le cas échéant en présence d'antidotes d'herbicides (safeners).

2. Utilisation selon la revendication 1, **caractérisée en ce que** chaque combinaison herbicide contient une teneur synergistiquement active en (A) et en (B).

3. Utilisation selon l'une quelconque des revendications 1 ou 2, l'utilisation de la combinaison herbicide ayant lieu dans le procédé de post-émergence.

4. Utilisation selon la revendication 3, **caractérisée en ce que** les substances actives sont répandues ensemble.

5. Utilisation selon l'une quelconque des revendications précédentes, **caractérisée en ce qu'**on utilise, comme substance active (A), du glyphosate-isopropylammonium.

6. Utilisation selon l'une quelconque des revendications précédentes, **caractérisée en ce que** les combinaisons herbicides sont utilisées en présence d'autres substances actives de phytoprotection et de substances auxiliaires et d'adjuvants de formulation usuels dans la phytoprotection.

7. Procédé pour lutter contre des plantes nuisibles dans les cultures de maïs tolérantes, **caractérisé en ce qu'**on applique les herbicides de la combinaison herbicide, définie selon l'une ou plusieurs des revendications 1, 2 ou 4 à 6, ensemble ou séparément, lors de la pré-émergence, la post-émergence ou lors de la pré-émergence et de la post-émergence, sur les plantes, les parties de plantes, les graines des plantes ou la surface de culture.

8. Procédé selon la revendication 7, **caractérisé en ce qu'**on applique les herbicides de la combinaison herbicide ensemble lors de la post-émergence.

9. Composition herbicide, **caractérisée en ce qu'**elle présente un herbicide (A) du groupe des composés du groupe des composés (A2) le glyphosate et ses sels de métal alcalin ou ses sels avec des amines et le sulfosate et un herbicide (B) du groupe (B1) des herbicides du groupe alachlor, fluthiamide, sulcotrione et mésotrione (B1) des herbicides du groupe pendiméthaline, iodosulfuron-méthyl, métosulam, isoxaflutole, métribuzine, cloransulam-méthyl, flumetsulam, florasulam ou
(B3) des herbicides du groupe bromoxynil, chlopyralid, carfentrazone-éthyl, halosulfuron-méthyl, diflufenzopyr et sulfosulfuron.

10. Composition herbicide selon la revendication 11 à 13, **caractérisée en ce que** la substance active (A) est le glyphosate-isopropylammonium.

11. Composition herbicide selon la revendication 10, **caractérisée en ce que** la combinaison herbicide contient une teneur synergistiquement active en (A) et en (B).

12. Composition herbicide selon l'une quelconque des revendications 9 à 11, **caractérisée en ce qu'**elle contient les additifs et adjuvants de formulation usuels en phytoprotection.

13. Utilisation de la composition définie selon l'une quelconque des revendications 9 à 12 pour la régulation de la croissance de plantes de maïs.

14. Utilisation de la composition définie selon l'une quelconque des revendications 9 à 13 pour influencer le rendement ou les constituants des plantes de maïs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9809525 A
- US 4671819 A
- US 5183492 A
- EP 496701 A
- DE 2856260 A
- WO 9208353 A
- EP 0252237 A
- WO 9200377 A
- EP 115673 A
- EP 409815 A
- EP 206251 A
- WO 9641537 A
- WO 9213845 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 0476555 A
- EP 0048436 A
- EP 0336151 A
- US 4400196 A
- EP 0502014 A


### In der Beschreibung aufgeführte Nicht-Patentliteratur


- The Pesticide Manual. British Crop Protection Council, 1997, 646-649
- *Zuckerrübe,* 1998, 217 ff
- The Pesticide Manual. British Crop Protection Council, 1997
- *Weed Science Society of America (WSSA) in WSSA Abstracts,* 1999, vol. 39, 65-66
- *Review,* 1999, vol. 17
- **SAMBROOK et al.** Molecular Cloning, A Laboratory Manual. Cold Spring Harbor Laboratory Press, 1989
- **WINNACKER.** Gene und Klone. VCH, 1996
- **CHRISTOU.** *Trends in Plant Science,* 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hauser Verlag, 1986, vol. 7
- **VAN VALKENBURG.** Pesticide Formulations. Marcel Dekker, 1973
- **K. MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesellschaft, 1976
- Factors Affecting Herbicidal Activity and Selectivity. *Proc. EWRS Symp.,* 1988, 227-232
- **S. R. COLBY.** *Weeds,* 1967, vol. 15, 20-22